# FASCICULE DE BREVET EUROPEEN

(11) **EP 1 686 306 B1**
(45) Date de publication et mention de la délivrance du brevet: **24.02.2010**
(21) Numéro de dépôt: 06290152.5
(22) Date de dépôt: 25.01.2006
(51) Int. Cl.: F16L 37/091, F16L 25/00

(54) **Dispositif de raccordement auto-extractible**
Herausziehbare Verbindungsvorrichtung
Extractable connecting arrangement

(30) Priorité: 28.01.2005 FR 0500907
(43) Date de publication de la demande: 02.08.2006
(73) Titulaire: LEGRIS SA, 35000 Rennes (FR)
(72) Inventeur: Le Bars, Nicolas, 35235 Thorigne (FR)
(74) Mandataire: Lavialle, Bruno François Stéphane

(56) Documents cités:
- FR-A- 2 810 087
- GB-A- 1 077 599
- US-A- 4 610 468

## Description

La présente invention concerne un dispositif de raccordement auto-extractible utilisable pour le raccordement d'une extrémité de conduite à un élément de circuit tel qu'un élément émetteur ou récepteur de fluide et par exemple une autre conduite, une pompe, un distributeur, un actionneur, une vanne...

### ARRIERE PLAN DE L'INVENTION

Un dispositif de raccordement d'une extrémité de conduite à une extrémité d'un canal d'un élément de circuit comporte généralement un corps tubulaire ayant une première extrémité pourvue de moyens de son ancrage dans ladite extrémité du canal, et une deuxième extrémité pourvue d'un logement de réception de l'extrémité de conduite et de moyens pour y assujettir de façon étanche l'extrémité de conduite.

Il est connu du document FR-A-2 810 087, un tel dispositif de raccordement dans lequel les moyens d'ancrage sont constitués d'une rondelle d'ancrage ayant une circonférence externe divisée en une pluralité de dents destinées à venir s'accrocher dans la paroi de l'extrémité de canal.

Lorsque l'extrémité de canal est taraudée, les dents de la rondelle d'ancrage sont agencées pour prendre appui contre une portion du filet du taraudage (comme dans le document précité) et, lorsque l'extrémité de canal est lisse, les dents de la rondelle sont agencées pour pénétrer dans la paroi de l'extrémité de canal.

Cette structure permet une installation rapide et fiable du dispositif de raccordement sur l'élément de circuit. Toutefois, de tels dispositifs de raccordement présentent l'inconvénient d'être indémontables ou difficilement démontables. Lorsqu'ils sont démontables, l'utilisation d'un outil est nécessaire pour les extraire : pour les extrémités de canal taraudées, le corps comporte en général une section polygonale permettant le dévissage du dispositif de raccordement au moyen d'une clé ; pour les extrémités de canal lisses, l'outil de démontage pourrait être un outil dédié introduit entre la paroi de l'extrémité de canal et le corps du dispositif de raccordement pour déformer la rondelle de manière à permettre l'extraction du dispositif de raccordement. Le recours à un outil dans ces conditions rend le démontage relativement difficile et peut aboutir à la détérioration du dispositif, notamment lorsque l'opérateur ne dispose pas de l'outil adéquat. Il est en outre nécessaire de prévoir dès la conception de l'élément de circuit, un espace libre suffisant autour du débouché du canal pour permettre le passage de l'outil de démontage du dispositif de raccordement. Une telle contrainte peut engendrer un encombrement relativement important de l'élément de circuit.

Il serait donc intéressant de disposer d'un moyen facilitant le démontage de tels dispositifs de raccordement.

Un dispositif de raccordement démontable selon le préambule des revendications 1 et 5 est connu de US 4610468.

Selon l'invention, on prévoit, un dispositif de raccordement d'une extrémité de conduite à une extrémité d'un canal débouchant sur une surface d'un élément de circuit selon les revendications 1 et 5.

Ainsi, lorsque le corps est en position de fonctionnement, le dispositif peut assurer de façon classique le raccordement entre l'extrémité de conduite et le canal de l'élément du canal. La liberté de mouvement axial du corps par rapport à l'embase permet d'amener celui-ci dans une position de démontage dans laquelle le corps permet l'extraction du dispositif de raccordement hors de l'extrémité du canal. Il n'est donc pas nécessaire de recourir à un outil lors de l'extraction.

Selon le premier aspect de l'invention, la rondelle d'ancrage est élastiquement déformable entre un état ouvert et un état refermé. Elle est montée sur le corps, et l'embase comporte une portion de butée axiale des dents de la rondelle d'ancrage pour maintenir la rondelle dans un de ses états.

Un tel agencement permet d'avoir un dispositif de raccordement susceptible d'être ancré dans un alésage lisse ou dans un alésage taraudé.

Selon un premier mode de réalisation, la rondelle d'ancrage est au repos dans son état ouvert et :
- lorsque le corps est dans sa position de fonctionnement, la rondelle d'ancrage est dégagée de la portion de butée,
- lorsque le corps est dans sa position de démontage, la rondelle est en appui contre la portion de butée qui maintient la rondelle dans son état refermé.

Selon un deuxième mode de réalisation la rondelle d'ancrage est au repos dans son état refermé et :
- lorsque le corps est en position de fonctionnement, la rondelle d'ancrage est en appui contre la portion de butée qui maintient la rondelle d'ancrage dans son état ouvert,
- lorsque le corps est en position de démontage, la rondelle d'ancrage est dégagée de la portion de butée.

Ces deux modes de réalisation sont relativement simples et permettent une extraction rapide du dispositif de raccordement en exerçant une traction axiale sur le corps après que la rondelle a été amenée dans son état refermé.

Selon le second aspect de l'invention, plus particulièrement destiné aux dispositifs de raccordements engagés dans des extrémités de canal taraudées, la rondelle d'ancrage est montée fixe en rotation sur l'embase et :
- lorsque le corps est en position de fonctionnement, il est libre en rotation par rapport à l'embase,
- lorsque le corps est en position de démontage, il est solidaire en rotation de l'embase.

Ainsi, lorsque le corps est en position de démontage, il est possible de dévisser le dispositif de raccordement en faisant pivoter le corps de celui-ci.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue en coupe longitudinale d'un dispositif de raccordement conforme à un premier mode de réalisation, lorsque le corps est en position de fonctionnement,
- la figure 2 est une vue de détail de la zone II de la figure 3,
- la figure 3 est une vue analogue à la figure 1 du dispositif de raccordement selon le premier mode de réalisation, lorsque le corps est en position de démontage,
- la figure 4 est une vue de dessus de ce dispositif de raccordement,
- la figure 5 est une vue de dessus d'un dispositif de raccordement selon un deuxième mode de réalisation,
- les figures 6 et 7 sont des vues analogues aux figures 1 et 3 de ce dispositif de raccordement,
- la figure 8 est une vue analogue à celle de la figure 1 d'un dispositif de raccordement selon un troisième mode de réalisation,
- les figures 9 et 10 sont des vues analogues aux figures 1 et 3 d'un dispositif de raccordement selon un quatrième mode de réalisation.

### DESCRIPTION DETAILLEE DE L'INVENTION

En référence aux figures, le dispositif conforme à l'invention est agencé pour raccorder une extrémité de conduite (non visible sur les figures) à un élément de circuit. Le dispositif de raccordement est destiné à être monté sur un élément de circuit, généralement désigné en 1, comportant un canal ayant une extrémité 2 débouchant sur une surface 3 de l'élément de circuit 1. L'élément de circuit 1 peut être un élément émetteur ou récepteur de fluide, comme par exemple une autre conduite, une pompe, un distributeur, un actionneur, une vanne...

Le dispositif de raccordement conforme à l'invention, généralement désigné en 10, comprend un corps tubulaire, généralement désigné en 11, présentant ici une forme coudée à 90°.

Le corps tubulaire 11 comprend une première extrémité 12 pourvue de moyens, portant la référence générale 13, de son ancrage dans l'extrémité de canal 2, et une deuxième extrémité 14 pourvue d'un logement de réception de l'extrémité de conduite et de moyens, généralement désignés en 15, pour y assujettir de façon étanche l'extrémité de conduite. Les moyens d'assujettissement étanches 15 sont ici des moyens de connexion instantanée qui sont connus en eux-mêmes (voir par exemple le document FR-A-2 810 087) et ne seront donc pas détaillés ici. .Ces moyens d'assujettissement peuvent également être des moyens de connexion non instantanée.

Les moyens d'ancrage 13 comportent une rondelle d'ancrage 16 et une embase, généralement désigné en 17, d'appui sur la surface 3 de l'élément de circuit 1.

La rondelle d'ancrage 16 possède une circonférence externe divisée en une pluralité de dents 18 agencées de telle manière que la rondelle d'ancrage 16 soit élastiquement déformable entre un état ouvert dans laquelle la rondelle d'ancrage 16 a un diamètre externe supérieur à un diamètre interne de l'extrémité de canal 2 et un état refermé dans lequel la rondelle d'ancrage 16 a un diamètre externe inférieur au diamètre interne de l'extrémité de canal 2.

La rondelle d'ancrage 16 est reçue dans une gorge externe 19 de l'extrémité 12 du corps tubulaire 11.

L'embase 17 comporte une douille 20 ayant une première extrémité 21 destinée à être introduite dans l'extrémité de canal 2 et une deuxième extrémité 22 destinée à s'étendre en saillie de celui-ci.

La douille 20 est pourvue extérieurement entre ses deux extrémités 21, 22 d'une collerette 23 ayant une surface inférieure destinée à prendre appui sur la surface 3 de l'élément de circuit 1. La surface inférieure de la collerette 23 est pourvue d'une gorge plane recevant de façon classique un élément d'étanchéité 24 annulaire et déformable.

Le corps tubulaire 11 est reçu dans la douille 20 de l'embase 17 à coulissement entre une position de fonctionnement et une position de démontage qui seront détaillées ci-après pour chacun des modes de réalisation.

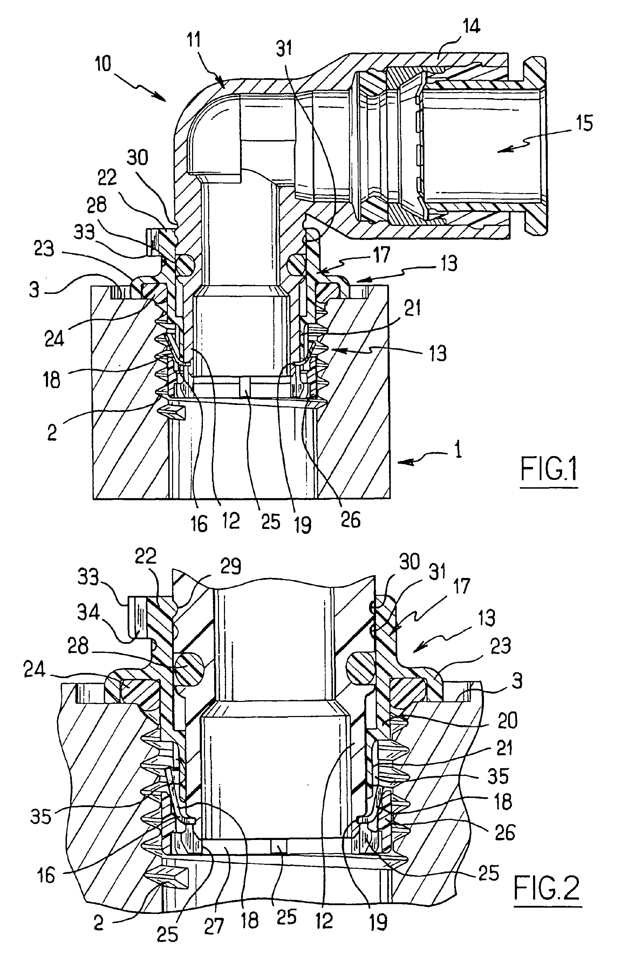

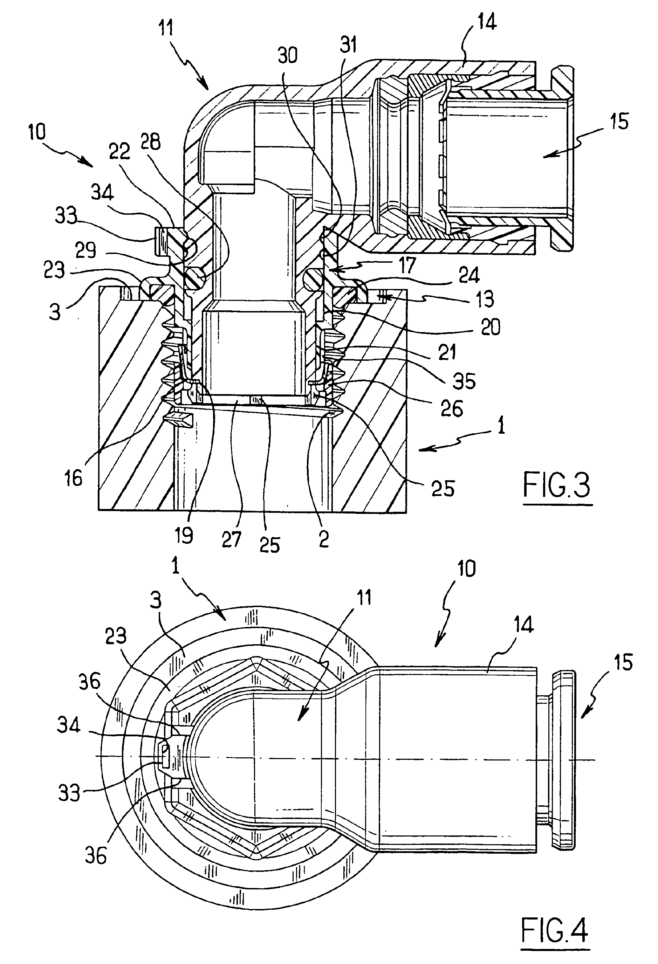

En référence aux figures 1 à 4, conformément au premier mode de réalisation, la rondelle d'ancrage 16 est au repos dans son état ouvert.

La douille 20 comprend des bras 25 s'étendant .axialement en saillie depuis son extrémité 21 pour avoir une extrémité libre sur laquelle est clipsée une bague 26 biseautée intérieurement du côté de la douille 20. Les bras 25 définissent entre eux des lumières 27.

En position de fonctionnement, la rondelle d'ancrage 16 est dans son état ouvert et a ses dents 18 qui s'étendent en saillie à l'extérieur de la douille 20 par les lumières 27.

En position de démontage, le corps tubulaire 11 est enfoncé dans la douille 20 de telle manière que la rondelle d'ancrage 16 se trouve en regard de la bague 26 dont la portion biseautée en formant une butée axiale pour les dents 18 déforme les dents 18 et maintient la rondelle d'ancrage 16 dans son état refermé.

Un élément d'étanchéité 28 annulaire et déformable est reçu dans une gorge externe du corps tubulaire 11 pour être appliqué sur la surface interne de la douille 20.

Le dispositif de raccordement comprend en outre un organe de retenue du corps tubulaire 11 dans ses deux positions. L'organe de retenue comprend un ergot 29 s'étendant en saillie interne d'une lame élastiquement déformable délimitée par deux fentes parallèles 36 ménagées dans l'extrémité 22 de l'embase 17 et deux gorges 30, 31 de réception de l'ergot 29 lorsque le corps tubulaire 11 est en position de fonctionnement et en position de démontage respectivement. Une excroissance 33 s'étend en saillie externe de l'extrémité 22 à l'opposé de l'ergot 29. L'excroissance 33 est pourvue d'une fente 34 permettant l'introduction d'une lame de tournevis ou d'un autre outil du même type. La lame est déformable entre une position dans laquelle l'ergot est reçu dans une des gorges et une position dans laquelle l'ergot est dégagé de la gorge. Les moyens de retenue ainsi formés sont de la sorte désactivables.

La mise en place du dispositif de raccordement 10 sur l'élément de circuit 1 est réalisée lorsque le corps tubulaire 11 est en position de fonctionnement.

L'extrémité 12 du corps tubulaire 11 est alors introduite directement dans l'extrémité de canal 2 jusqu'à ce que la face d'appui de la collerette 23 de l'embase 17 vienne en butée contre la surface 3 de l'élément de circuit 1. Les dents 18 se déforment vers l'état refermé de la rondelle d'ancrage 16 en restant en appui contre la paroi de l'extrémité de canal 2. Dans le cas d'une extrémité de canal taraudée comme représenté sur les figures, il est possible de légèrement visser l'embase 17 afin d'améliorer la fixation de celui-ci. Ceci est possible grâce à la présence de cannelures 35 sur l'extrémité 21 de l'embase 17 qui reçoivent entre elles des dents 18. Lorsqu'un mouvement de pivotement est imprimé à l'embase 17 (par exemple au moyen d'une clé pour agir sur une section polygonale de l'embase), les cannelures coopèrent avec au moins une partie de certaines des dents 18 pour entraîner la rondelle 16 en rotation.

Un effort d'extraction qui serait exercé sur le corps tubulaire provoquerait l'arc-boutement des dents de la rondelle d'ancrage 16 dont les dents 18 prendraient appui sur le filet du taraudage (cas d'une extrémité de canal taraudée comme représenté sur les figures). Cet arc-boutement des dents 18 s'oppose au retrait du dispositif de raccordement 10.

L'extraction est réalisée en déformant la lame élastique pourvue de l'ergot 29, par exemple en faisant levier au moyen d'un tournevis engagé dans la fente 34, pour sortir l'ergot 29 de la gorge 30 tout en enfonçant le corps tubulaire 11 en position de démontage. La rondelle d'ancrage est alors amenée et maintenue dans son état refermé par la bague 26. La lame relâchée, l'ergot 29 vient dans la gorge 31 pour retenir le corps tubulaire 11 en position de démontage. En position de démontage, une partie du corps tubulaire 11, notamment sa partie centrale coudée et son extrémité 14, reste en saillie de l'embase 13 et de l'extrémité 2 du canal, permettant ainsi la préhension du corps tubulaire. En tirant sur cette partie du corps tubulaire 11, il est alors possible d'extraire le dispositif de raccordement.

Les éléments identiques ou analogues à ceux précédemment décrits porteront la même référence dans la description qui suit des autres modes de réalisation.

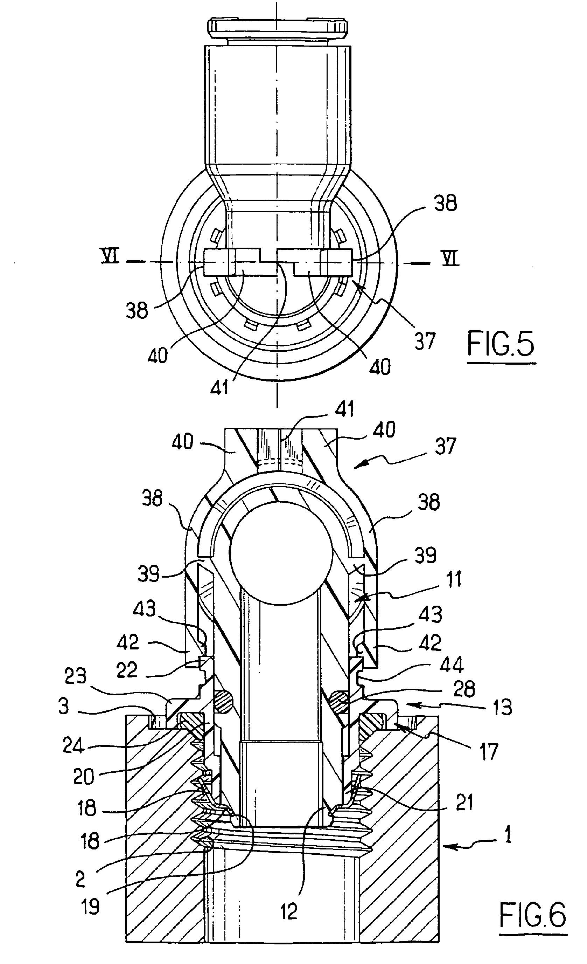

En référence aux figures 5 à 7, conformément au deuxième mode de l'invention, la rondelle d'ancrage 16 n'est plus au repos dans son état ouvert mais dans son état refermé. L'extrémité 21 de la douille 20 de l'embase 17 ne comporte plus de bras 25 ni de bague 26 et l'extrémité 12 du corps tubulaire 11 s'étend en saillie de l'extrémité 21 de la douille 20.

Lorsque le corps tubulaire 11 est dans sa position de fonctionnement, les dents 18 de la rondelle d'ancrage 16 sont en appui contre l'extrémité 21 de la douille 20 qui constitue une butée axiale pour les dents 18 et maintient la rondelle d'ancrage 16 dans son état ouvert.

Lorsque le corps tubulaire 11 est dans sa position de démontage, les dents 18 de la rondelle d'ancrage 16 échappent à leur appui sur l'extrémité 21 de la douille 20 et la rondelle d'ancrage 16 est dans son état refermé.

Le corps tubulaire 11 est en outre pourvu d'un organe de retenue du corps tubulaire 11 en position de fonctionnement et en position de démontage. Cet organe a la forme d'une pince, généralement désignée en 37, comportant deux bras 38 ayant une portion centrale reliée au corps tubulaire 11 par une patte déformable 39, des extrémités supérieures 40 maintenues écartées l'une de l'autre par une entretoise 41 présentant une amorce de rupture et des extrémités opposées 42 pourvues d'un redan interne 43 agencé pour prendre appui sur une face terminale de l'extrémité 22 de la douille 20 lorsque le corps tubulaire 11 est en position de fonctionnement et pour être reçu dans une gorge externe 44 de cette extrémité lorsque le corps tubulaire 11 est en position de démontage.

La mise en place du dispositif de raccordement 10 sur l'élément de circuit 1 est réalisée comme précédemment.

Pour extraire le dispositif de raccordement 10, il faut exercer un rapprochement des extrémités supérieures 40 de la pince 37 en brisant l'entretoise 41 de manière à dégager les redans 43 des extrémités inférieures 42 de l'appui contre la face terminale de l'extrémité 22 de la douille 20. Il faut ensuite enfoncer le corps tubulaire 11 vers sa position de démontage jusqu'à ce que les redans 43 des extrémités inférieures 42 de la pince 37 puissent être reçues dans la gorge 44. Lors de ce mouvement d'enfoncement, les dents 18 de la rondelle d'ancrage 16 quittent leur appui de l'extrémité 21 de la douille 20 de sorte que les dents 18 retournent élastiquement dans leur position de repos : la rondelle d'ancrage 16 est alors dans son état refermé. Il est dès lors possible d'exercer un effort de traction sur la partie du corps tubulaire 11 en saillie de l'extrémité de canal 2 pour extraire le dispositif de raccordement 10 hors de l'extrémité de canal 2. La pince 37 assure alors la solidarisation axiale du corps tubulaire 11 avec l'embase 17. La rondelle d'ancrage 16 assure également une solidarisation axiale du corps tubulaire 11 avec l'embase 17, les dents 18 de la rondelle d'ancrage 16 en état refermé entraînant également l'embase 17 par appui contre l'extrémité 21 (en l'absence de résistance à l'extraction, l'effort d'extraction est insuffisant pour d'extraction est insuffisant pour déformer les dents 18 et amener la rondelle d'ancrage 16 dans son état ouvert).

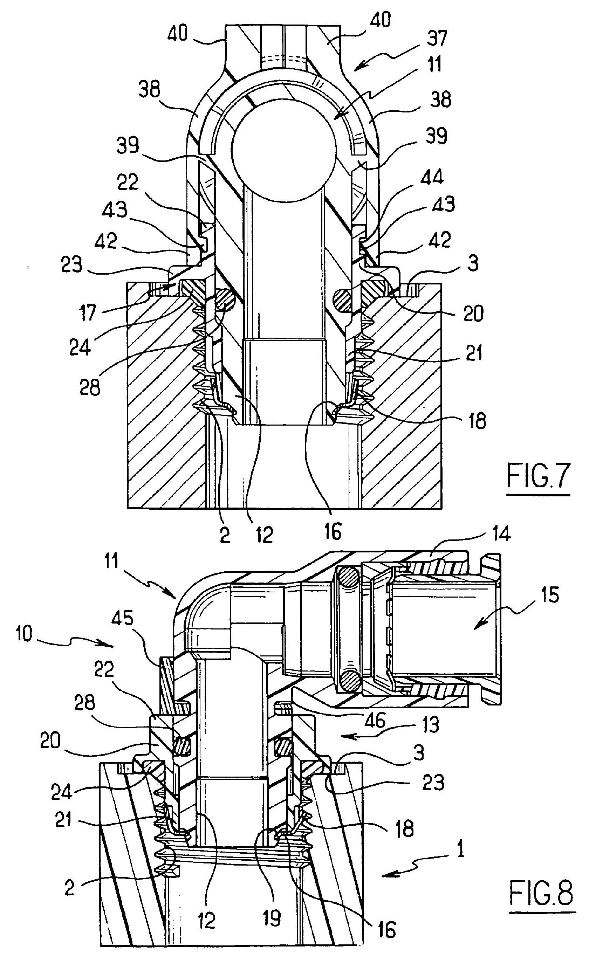

En référence à la figure 8, conformément au troisième mode de réalisation, le dispositif de raccordement 10 est identique au deuxième mode de réalisation sauf en ce qui concerne les moyens de retenue du corps tubulaire 11 dans ses deux positions.

Le dispositif de raccordement 10 selon le troisième mode de réalisation comprend uniquement des moyens de retenue du corps tubulaire 11 dans sa position de fonctionnement. Ces moyens comprennent un anneau élastique fendu 45 reçu de façon amovible dans une gorge 46 ménagée extérieurement sur le corps tubulaire 11 de manière qu'en position de fonctionnement l'anneau élastique fendu 45 s'étend en saillie du corps tubulaire et prend appui axialement sur l'extrémité 22 de l'embase 17 pour s'opposer à l'enfoncement du corps tubulaire 11 vers sa position de démontage.

Pour extraire le dispositif de raccordement 10, l'anneau élastique fendu 45 est ôté avant que le corps tubulaire 11 soit enfoncé dans sa position de démontage. La suite de l'opération d'extraction se déroule comme dans le deuxième mode de réalisation.

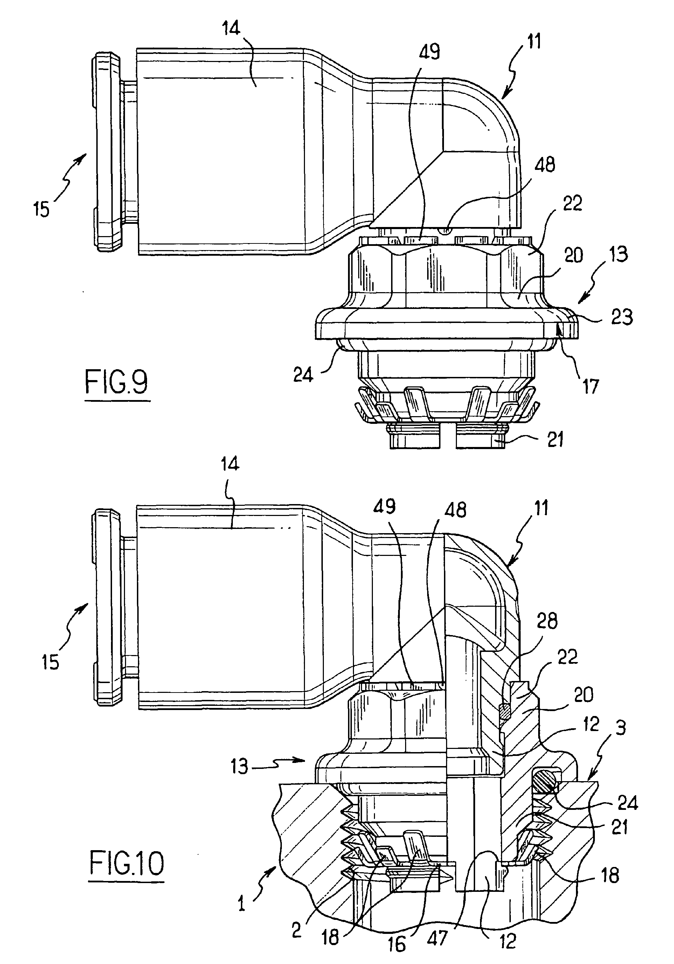

En référence aux figures 9 et 10, conformément au quatrième mode de réalisation, la rondelle d'ancrage 16 est reçue dans une gorge externe 47 de l'extrémité 21 de la douille 20 de l'embase 17 et est solidaire en rotation de cette extrémité 21 (la rondelle d'ancrage 16 peut par exemple comprendre une dent interne reçue dans une fente de l'extrémité 21).

Le corps tubulaire 11 et l'embase 17 comprennent des moyens réciproques de crabotage qui sont agencés de telle manière qu'ils sont dégagés les uns des autres lorsque le corps tubulaire 11 est en position de fonctionnement (le corps tubulaire 11 est alors libre en rotation par rapport à l'embase 17) et qu'ils coopèrent les uns avec les autres lorsque le corps tubulaire 11 est en position de démontage (le corps tubulaire 11 est alors solidaire en rotation de l'embase 17). Ces moyens réciproques de crabotage comprennent ici des saillies axiales 48 agencées sur le corps tubulaire 11 et des renfoncements axiaux 49 agencés sur l'extrémité 22 de la douille 20 de l'embase 17 pour recevoir les saillies axiales 48 du corps tubulaire 11 lorsque celui-ci est en position de démontage.

La mise en place du dispositif de raccordement 10 est effectuée de la même manière que pour les modes de réalisation précédents.

Le démontage est lui réalisé en amenant le corps tubulaire 11 dans sa position de démontage et en faisant pivoter celui-ci de manière à dévisser le dispositif de raccordement 10.

On notera que l'élément d'étanchéité 28 annulaire et déformable est intercalé entre deux épaulements appartenant pour l'un au corps tubulaire 11 et pour l'autre à la douille 20. L'élément d'étanchéité 28 assure une fonction de rappel élastique du corps tubulaire 11 en position de fonctionnement. En outre, lorsque le circuit dans lequel est implanté le dispositif de raccordement est sous pression, le fluide sous pression repousse le corps tubulaire 11 en position de fonctionnement.

Bien entendu, l'invention n'est pas limitée aux modes de réalisation décrits et on peut y apporter des variantes de réalisation sans sortir du cadre de l'invention tel que défini par les revendications.

En particulier, bien que l'élément d'étanchéité entre l'embase et le corps soit utilisé dans le quatrième mode de réalisation décrit pour rappeler élastiquement le corps en position de fonctionnement, il est possible d'utiliser un organe de rappel dédié tel qu'un ressort hélicoïdal de compression intercalé entre le corps et l'embase ou des pattes élastiquement déformables solidaires du corps ou de l'embase pour prendre appui sur l'embase ou le corps et repousser ces deux éléments l'un de l'autre.

Bien que dans certains des modes de réalisation décrits, l'organe de retenue soit formé par une pince (deuxième mode de réalisation), un verrou mobile radialement (premier mode de réalisation) ou un segment d'arrêt (troisième mode de réalisation), il est en outre possible de prévoir entre le corps et l'embase une butée auto-cassante (ou frangible) qui s'oppose au mouvement du corps vers sa position de démontage à moins qu'un effort suffisant pour la briser soit exercé sur celui-ci. Les moyens de retenue peuvent également être réalisés sous la forme d'un ergot solidaire de l'embase ou du corps tubulaire pour être reçu dans une rainure en baïonnette ayant un tronçon central s'étendant axialement et deux tronçons d'extrémité s'étendant selon des direction circonférentielles.

Par ailleurs, le corps tubulaire peut être rectiligne ou coudé selon un angle différent de 90°.

La rondelle d'ancrage peut être agencée pour que ses dents mordent la paroi de l'extrémité de canal 2 (cas d'une extrémité de canal lisse).

Les moyens de crabotage peuvent comprendre une section hexagonale mâle de l'extrémité 12 du corps tubulaire 11 et une section hexagonale femelle de l'embase.

Il est en outre possible de combiner les modes de réalisation décrits.

Bien que, dans les modes de réalisation décrits, l'extrémité 14 du corps tubulaire 11 soit pourvue de moyens de réception étanche de l'extrémité de conduite, l'extrémité 14 peut être destinée à être introduite dans des moyens de connexion solidaires de l'extrémité de con-conduite. L'extrémité 14 peut être lisse extérieurement ou pourvue d'une gorge ou d'un bourrelet.

## Revendications

1. Dispositif de raccordement (10) d'une extrémité de conduite à une extrémité (2) d'un canal débouchant sur une surface (3) d'un élément de circuit (1), le dispositif comportant un corps tubulaire (11) ayant une première extrémité (12) pourvue de moyens (13) de son ancrage dans ladite extrémité du canal et une deuxième extrémité (14) destinée à saillir de ladite surface de l'élément de circuit pour être raccordée à l'extrémité de conduite, des moyens d'ancrage comprenant une embase (17) d'appui sur ladite surface de l'élément de circuit, l'embase recevant à coulissement le corps entre une position de fonctionnement et une position de démontage, **caractérisé en ce que** les moyens d'ancrage comprennent également une rondelle d'ancrage (16) élastiquement déformable entre un état ouvert et un état refermé, **en ce que** la rondelle d'ancrage est montée sur le corps (11) et **en ce que** l'embase (17) comporte une portion de butée (26 ; 21) axiale de dents (18) de la rondelle d'ancrage pour maintenir la rondelle d'ancrage dans un de ses états, de telle manière qu'en position de démontage le corps constitue un moyen d'extraction du dispositif de raccordement hors du canal.

2. Dispositif selon la revendication 1, **caractérisé en ce que** la rondelle d'ancrage (16) est au repos dans son état ouvert et **en ce que** :
- lorsque le corps (11) est dans sa position de fonctionnement, la rondelle d'ancrage est dégagée de la portion de butée (26),
- lorsque le corps est dans sa position de démontage, la rondelle est en appui contre la portion de butée qui maintient la rondelle dans son état refermé.

3. Dispositif selon la revendication 1, **caractérisé en ce que** la rondelle d'ancrage (16) est au repos dans son état refermé et **en ce que** :
- lorsque le corps (11) est en position de fonctionnement, la rondelle d'ancrage est en appui contre la portion de butée (22) qui maintient la rondelle d'ancrage dans son état ouvert,
- lorsque le corps est en position de démontage, la rondelle d'ancrage est dégagée de la portion de butée.

4. Dispositif selon l'une quelconque des revendications précédentes, **caractérisé en ce que** le corps (11) est enfoncé en position de démontage et **en ce que** le dispositif comprend un élément de retenue (29 ; 37) du corps en position de démontage, l'élément de retenue s'étendant entre le corps et l'embase (17).

5. Dispositif de raccordement (10) d'une extrémité de conduite à une extrémité (2) d'un canal débouchant sur une surface (3) d'un élément de circuit (1), le dispositif comportant un corps tubulaire (11) ayant une première extrémité (12) pourvue de moyens (13) de son ancrage dans ladite extrémité du canal et une deuxième extrémité (14) destinée à saillir de ladite surface de l'élément de circuit pour être raccordée à l'extrémité de conduite, les moyens d'ancrage comprenant une embase (17) d'appui sur ladite surface de l'élément de circuit, l'embase recevant à coulissement le corps entre une position de fonctionnement et une position de démontage, **caractérisé en ce que** les moyens d'ancrage comprennent également une rondelle d'ancrage (16) montée fixe en rotation sur l'embase (17) et **en ce que** :
- lorsque le corps (11) est en position de fonctionnement, il est libre en rotation par rapport à l'embase,
- lorsque le corps est en position de démontage, il est solidaire en rotation de l'embase, de telle manière qu'en position de démontage le corps constitue un moyen d'extraction du dispositif de raccordement hors du canal.

6. Dispositif selon la revendication 5, **caractérisé en ce que** l'embase (17) et le corps (11) comportent des moyens (48, 49) réciproques de crabotage agencés pour coopérer lorsque le corps est en position de démontage.

7. Dispositif selon la revendication 6, **caractérisé en ce qu'**il comporte un moyen de rappel élastique (28) du corps (11) en position de fonctionnement.

8. Dispositif selon la revendication 7, **caractérisé en ce que** le moyen de rappel élastique comprend un élément d'étanchéité annulaire (28) déformable élastiquement et intercalé entre deux portions d'appui axial appartenant pour l'une à l'embase (17) et pour l'autre au corps (11).

9. Dispositif selon la revendication 1 ou 6, **caractérisé en ce qu'**il comprend des moyens désactivables de retenue (29, 30 ; 37 ; 45) du corps en position de fonctionnement.

10. Dispositif selon la revendication 1 ou 6, **caractérisé en ce que** la deuxième extrémité (14) du corps tubulaire (11) est pourvue d'un logement de réception de l'extrémité de conduite et de moyens (15) pour y assujettir de façon étanche l'extrémité de conduite.

11. Dispositif selon la revendication 1 ou 6, **caractérisé en ce que** la deuxième extrémité (14) est agencée pour être engagée dans des moyens de connexion de l'extrémité de conduite.

## Claims

1. A coupling device (10) for coupling a pipe end to a channel end (2) opening out into a surface (3) of a circuit element (1), the device comprising a tubular body (11) having a first end (12) provided with means (13) for anchoring it in said channel end, and a second end (14) for projecting from said surface of the circuit element in order to be coupled to the pipe end, the anchor means comprising a socket (17) bearing against said surface of the circuit element, the socket slidably receiving the body between an operating position and a disassembly position, **characterized in that** the anchor means also comprise an anchor washer (16) elastically deformable between an open state and a closed state, **in that** the anchor washer is mounted on the body (11), and **in that** the socket (17) includes an axial abutment portion (26; 21) for engaging the teeth (18) of the anchor washer to hold the anchor washer in one of its states, so that, in the disassembly position, the body constitutes means for extracting the coupling device from the channel.

2. A device according to claim 1, **characterized in that** the anchor washer (16) is at rest when in its open state, and **in that**:
· when the body (11) is in its operating position, the anchor washer is disengaged from the abutment portion (26); and
· when the body is in its disassembly position, the washer is pressed against the abutment portion, which holds the washer in its closed state.

3. A device according to claim 1, **characterized in that** the anchor washer (16) is at rest when it is in its closed state, and **in that**:
· when the body (11) is in the operating position, the anchor washer is pressed against the abutment portion (22), which holds the anchor washer in its open state; and
· when the body is in the disassembly position, the anchor washer is disengaged from the abutment portion.

4. A device according to any preceding claim, **characterized in that** the body (11) is pushed into the disassembly position, and **in that** the device includes a retaining element (29; 37) for holding the body in the disassembly position, the retaining element extending between the body and the socket (17).

5. A coupling device (10) for coupling a pipe end to a channel end (2) opening out into a surface (3) of a circuit element (1), the device comprising a tubular body (11) having a first end (12) provided with means (13) for anchoring it in said channel end, and a second end (14) for projecting from said surface of the circuit element in order to be coupled to the pipe end, the anchor means comprising a socket (17) bearing against said surface of the circuit element, the socket slidably receiving the body between an operating position and a disassembly position" **characterized in that** the anchor means also comprise an washer (16) mounted on the socket (17) and is constrained to turn therewith, and **in that**:
· when the body (11) is in the operating position, it is free to turn relative to the socket; and
· when the body is in the disassembly position, it is constrained in rotation with the socket, so that, in the disassembly position, the body constitutes means for extracting the coupling device from the channel.

6. A device according to claim 5, **characterized in that** the socket (17) and the body (11) include complementary positive coupling means (48, 49) arranged to co-operate when the body is in the disassembly position.

7. A device according to claim 6, **characterized in that** it includes resilient return means (28) for urging the body (11) towards the operating position.

8. A device according to claim 7, **characterized in that** the resilient return means comprise an elastically deformable annular sealing element (28) interposed between two axial bearing portions, one belonging to the socket (17) and the other to the body (11).

9. A device according to claim 1 or 6, **characterized in that** it includes deactivatable retaining means (29, 30; 37; 45) for holding the body in the operating position.

10. A device according to claim 1 or 6, **characterized in that** the second end (14) of the tubular body (11) is provided with a housing for receiving the pipe end, and for receiving means (15) for retaining the pipe end therein in leaktight manner.

11. A device according to claim 1 or 6, **characterized in that** the second end (14) is arranged to be engaged in connection means of the pipe end.

## Patentansprüche

1. Verbindungsvorrichtung (10) zum Verbinden eines Leitungsendes mit einem Ende (2) eines Kanals, der an einer Oberfläche (3) eines Leitungskreiselements (1) mündet, wobei die Vorrichtung ein röhrförmiges Gehäuse (11) umfasst, das ein erstes Ende (12) hat, das mit Mitteln (13) für seine Verankerung in dem genannten Ende des Kanals versehen ist, sowie ein zweites Ende (14), das dazu bestimmt ist, von der genannten Oberfläche des Leitungskreiselements vorzustehen, um mit dem Leitungsende verbunden zu werden, wobei die Verankerungsmittel einen Fuß (17) zur Anlage an der genannten Oberfläche des Leitungskreiselements umfassen, und wobei der Fuß das Gehäuse verschiebbar zwischen einer Betriebsstellung und einer Demontagestellung aufnimmt, **dadurch gekennzeichnet, dass** die Verankerungsmittel ferner eine Verankerungsscheibe (16) umfassen, die zwischen einem offenen Zustand und einem geschlossenen Zustand elastisch verformbar ist, dass die Verankerungsscheibe an dem Gehäuse (11) angebracht ist und dass der Fuß (17) einen axialen Anschlagabschnitt (26; 21) mit Zähnen (18) für den Anschlag der Verankerungsscheibe umfasst, um die Verankerungsscheibe in einem ihrer Zustände zu halten, derart, dass das Gehäuse in der Demontagestellung Ausziehmittel zum Herausziehen der Verbindungsvorrichtung aus dem Kanal darstellt.

2. Vorrichtung nach Anspruch 1, **dadurch gekennzeichnet, dass** die Verankerungsscheibe (16) in ihrem offenen Zustand im Ruhezustand ist und dass:
- wenn das Gehäuse (11) in seiner Betriebsstellung ist, die Verankerungsscheibe von dem Anschlagabschnitt (26) gelöst ist,
- wenn das Gehäuse (11) in seiner Demontagestellung ist, die Scheibe an dem Anschlagabschnitt anliegt, der die Scheibe in ihrem geschlossenen Zustand hält.

3. Vorrichtung nach Anspruch 1, **dadurch gekennzeichnet, dass** die Verankerungsscheibe (16) in ihrem geschlossenen Zustand im Ruhezustand ist und dass:
- wenn das Gehäuse (11) in der Betriebsstellung ist, die Verankerungsscheibe an dem Anschlagabschnitt (22) anliegt, der die Verankerungsscheibe in ihrem offenen Zustand hält,
- wenn das Gehäuse in der Demontagestellung ist, die Verankerungsscheibe von dem Anschlagabschnitt gelöst ist.

4. Vorrichtung nach einem der vorhergehenden Ansprüche, **dadurch gekennzeichnet, dass** das Gehäuse (11) in die Demontagestellung gedrückt wird und dass die Vorrichtung ein Rückhalteelement (29; 37) zum Halten des Gehäuses in der Demontagestellung umfasst, wobei sich das Rückhalteelement zwischen dem Gehäuse und dem Fuß (17) erstreckt.

5. Verbindungsvorrichtung (10) zum Verbinden eines Leitungsendes mit einem Ende (2) eines Kanals, der an einer Oberfläche (3) eines Leitungskreiselements (1) mündet, wobei die Vorrichtung ein rohrförmiges Gehäuse (11) umfasst, das ein erstes Ende (12) hat, das mit Mitteln (13) für seine Verankerung in dem genannten Ende des Kanals versehen ist, sowie ein zweites Ende (14), das dazu bestimmt ist, von der genannten Oberfläche des Leitungskreiselements vorzustehen, um mit dem Leitungsende verbunden zu werden, wobei die Verankerungsmittel einen Fuß (17) zur Anlage an der genannten Oberfläche des Leitungskreiselements umfassen, wobei der Fuß das Gehäuse verschiebbar zwischen einer Betriebsstellung und einer Demontagestellung aufnimmt, **dadurch gekennzeichnet, dass** die Verankerungsmittel ferner eine Verankerungsscheibe (16) umfassen, die drehfest an dem Fuß (17) befestigt ist und dass:
- wenn das Gehäuse (11) in der Betriebsstellung ist, es sich gegenüber dem Fuß frei drehen kann,
- wenn das Gehäuse in der Demontagestellung ist, es drehfest mit dem Fuß verbunden ist, derart, dass das Gehäuse in der Demontagestellung Ausziehmittel zum Herausziehen der Verbindungsvorrichtung aus dem Kanal darstellt.

6. Vorrichtung nach Anspruch 5, **dadurch gekennzeichnet, dass** der Fuß (17) und das Gehäuse (11) wechselseitig wirkende Klauenmittel (48, 49) umfassen, die derart ausgebildet sind, dass sie zusammenwirken, wenn das Gehäuse in der Demontagestellung ist.

7. Vorrichtung nach Anspruch 6, **dadurch gekennzeichnet, dass** sie elastische Rückstellmittel (28) zum Rückstellen des Gehäuses (11) in die Betriebsstellung umfasst.

8. Vorrichtung nach Anspruch 7, **dadurch gekennzeichnet, dass** die elastischen Rückstellmittel ein ringförmiges Abdichtungselement (28) umfassen, das elastisch verformbar und zwischen zwei Abschnitten zur axialen Anlage angeordnet ist, von denen einer zum Fuß (17) und der andere zum Gehäuse (11) gehört.

9. Vorrichtung nach Anspruch 1 oder 6, **dadurch gekennzeichnet, dass** sie deaktivierbare Rückhaltemittel (29, 30; 37; 45) zum Halten des Gehäuses in der Betriebsstellung umfasst.

10. Vorrichtung nach Anspruch 1 oder 6, **dadurch gekennzeichnet, dass** das zweite Ende (14) des rohrförmigen Gehäuses (11) mit einer Aufnahme für das Leitungsende sowie mit Mitteln (15) versehen ist, um das Leitungsende dort auf dichte Weise anzubringen.

11. Vorrichtung nach Anspruch 1 oder 6, **dadurch gekennzeichnet, dass** das zweite Ende (14) derart ausgebildet ist, dass es mit Verbindungsmitteln zum Verbinden des Leitungsendes in Eingriff gebracht werden kann.
